# DEMANDE DE BREVET EUROPEEN

(11) **EP 0 425 341 A1**
(43) Date de publication de la demande: **02.05.1991**
(21) Numéro de dépôt: 90402884.2
(22) Date de dépôt: 16.10.1990
(51) Int. Cl.: C08G 63/60, C08G 63/664

(54) **Compositions aromatiques thermotropes et leur procédé de préparation**

(30) Priorité: 24.10.1989 FR 8913923
(71) Demandeur: ELF ATOCHEM S.A., F-92800 Puteaux (FR)
(72) Inventeur: Judas, Didier, F-75017 Paris (FR); Douais, Patrick, F-27470 Le Noyer en Ouche (FR)

(57) **Abrégé**

Copolyesters aromatiques thermotropes comprenant des unités récurrentes 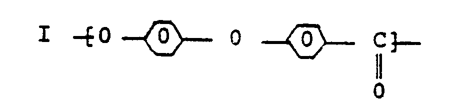 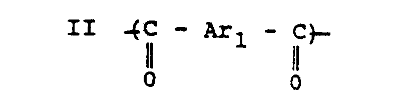 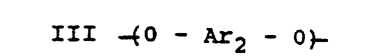 et éventuellement 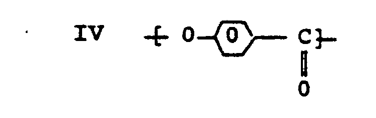 dans lesquelles Ar₁ représente un radical aromatique et/ou cycloaliphatique et Ar₂ un radical aromatique.

Ils sont obtenus par polycondensation d'acide p-(hydroxy p-phénoxy)benzoïque, d'un diacide aromatique ou cycloaliphatique, d'un diphénol et éventuellement d'acide p-hydroxy benzoïque.

## Description

La présente invention concerne des copolyesters aromatiques thermotropes comprenant des entités issues de l'acide para (hydroxy para phénoxy)benzoïque ou de ses dérivés, d'un diacide aromatique ou cycloaliphatique ou de ses dérivés, d'un diphénol ou de ses dérivés, et éventuellement de l'acide para hydroxy benzoïque substitué ou de ses dérivés.

Les cycles (aromatiques ou aliphatiques) desdits monomères pouvant être substitués ou non.

Ces copolyesters possèdent la caractéristique d'être thermotropes, c'est-à-dire qu'ils sont capables de donner des masses fondues anisotropes qui sont faciles à conformer par filage ou moulage.

Comme indiqué dans le EP-A 0010051, la mise en évidence de l'anisotropie des polyesters peut se faire par la méthode thermo-optique TOT décrite dans le FR-A 2 270 282. Lorsqu'on observe le copolymère à l'état fondu dans des systèmes optiques équipés de polariseurs croisés, il se produit une transmission de la lumière polarisée et création d'une forte biréfringence alors que la transmission de la lumière et la biréfringence sont nulles pour les produits isotropes. De ce fait, les masses fondues possèdent une orientation propre et un degré relativement élevé d'organisation qui se retrouvent sur les articles conformés tels que les fils, films, objets moulés, leur conférant déjà à l'état brut des propriétés améliorées telles que module, ténacité, qu'on n'observe pas habituellement sur les produits bruts isotropes. En particulier ces objets moulés possèdent des caractéristiques intéressantes dans une direction, comparables à celle de matières plastiques renforcées par des fibres de verre.

De façon générale les copolymères thermotropes, s'ils possèdent d'excellentes propriétés mécaniques ont en contrepartie des températures de fusion élevées : en général de l'ordre de 270 à 400 C. Ces températures élevées nécessitent des appareillages de transformation adaptés et entraînent une consommation d'énergie supérieure à celle nécessaire à la transformation des résines classiques. De plus, lorsque les températures de fusion sont élevées l'obtention de pièces moulées possédant d'excellentes propriétés mécaniques s'avère délicate voire impossible.

On a déjà décrit dans la littérature des copolyesters aromatiques thermotropes ou non :
Dans le brevet US 4 067 852 au nom de CELANESE, on a décrit des copolyesters thermotropes, totalement aromatiques constitués d'unités de récurrence dérivant de l'acide p-hydroxy benzoïque, de l'acide 2,6-naphtodioïque et de l'hydroquinone transformables à la fusion.

Dans le brevet US 4 161 470 au nom de CELANESE, on a décrit des copolyesters aromatiques thermotropes dérivés de l'acide hydroxy-6 naphtoïque-2 et de l'acide p-hydroxy benzoïque.

On connait également des copolyesters aromatiques comportant des entités issues de l'acide p-(hydroxy p- phénoxy)benzoïque ou de ses dérivés :
Dans la demande de brevet J80-133423 au nom de HITACHI, on a décrit la préparation de copolyesters à partir d'acide (acétoxy p-(ou o- ou m-) phénoxy)benzoïque, d'acide téréphtalique et de diacétate de bisphénol. Ces copolyesters ne sont pas thermotropes et ils sont en outre solubles dans le chloroforme, le chlorobenzène et la N-méthyl pyrrolidone, solvants dans lesquels les copolyesters thermotropes sont en général insolubles.

Dans la demande de brevet EP 275 164 au nom de ICI, on a décrit des copolyesters dérivés de l'acide p-hydroxy benzoïque, de l'hydroquinone, de l'acide isophtalique et de l'acide p-(hydroxy p-phénoxy)-benzoïque dont la teneur en monomères issus de l'acide p-(hydroxy p-phénoxy)benzoïque est inférieure ou égale à 2,5 % en mole de l'ensemble des monomères.

Dans la demande de brevet J63-101 416 au nom de ASAHI CHEMICAL, on a décrit des copolyesters thermotropes dérivant essentiellement d'acide p-hydroxy benzoïque et d'acide p-(hydroxy p-phényl)-benzoïque, ou d'acide p-(hydroxy p-phénoxy)benzoïque et éventuellement jusqu'à 5 % en mole d'acide iso-ou téréphtalique et de résorcinol par rapport à l'ensemble des monomères.

Quel que soit le rapport molaire entre les motifs dérivés de l'acide p-hydroxy benzoïque et ceux dérivés de l'acide p-(hydroxy p-phénoxy)benzoïque leur point de fusion étant supérieur à 345 C, leur transformation en pièces moulées nécessite donc une température supérieure à 370 C, ce qui rend leur mise en oeuvre particulièrement délicate. De plus, leurs propriétés mécaniques ne sont pas très bonnes.

Les copolyesters selon l'invention comprennent les unités de récurrence suivantes : 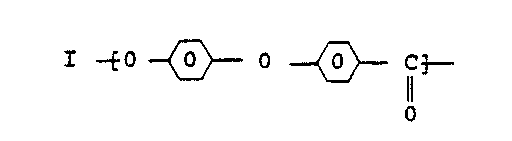 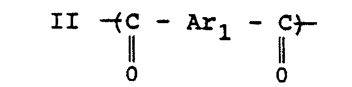 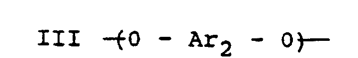 et éventuellement 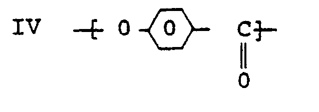 dans lesquelles :
Ar₁ représente un radical aromatique et/ou cycloaliphatique, Ar₂ représente un radical aromatique, chaque cycle aromatique ou aliphatique des unités de récurrence I à IV étant substitué ou non, et sont caractérisés en ce que :

- la quantité des unités I par rapport à la somme de toutes les unités de récurrence est comprise entre 2,5 et 60 % en mole (a)
- la quantité des unités Il par rapport à la somme de toutes les unités de récurrence est comprise entre 2,5 et 45 % en mole (b)
- la quantité des unités III par rapport à la somme de toutes les unités de récurrence est comprise entre 2,5 et 45 % en mole (c)
- la quantité des unités IV par rapport à la somme de toutes les unités de récurrence est comprise entre 0 et 90 % en mole (d)
- le rapport molaire des unités II aux unités III est compris entre 0,95 et 1,05.

Dans les unités de récurrence Il et III les radicaux divalents Ar₁ et Ar₂ représentent chacun un radical comportant un ou plusieurs noyaux aromatiques, plus simplement Ar, pouvant être accolés ou reliés entre eux soit par liaison covalente, soit par l'intermédiaire d'un atome d'oxygène ou de soufre, ou encore par l'intermédiaire d'un radical divalent aliphatique, linéaire ou ramif ié, saturé ou insaturé, pouvant comporter au sein de cette chaîne un ou plusieurs atomes d'oxygène et/ou de soufre.

A titre d'illustration et de façon non exhaustive, on peut représenter Ar par les formules suivantes :

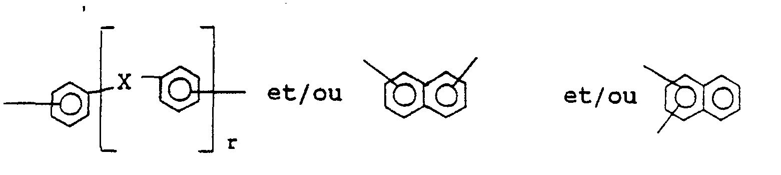

Dans la première formule, r est égal à 0, 1 ou 2 et X représente un radical divalent de formule 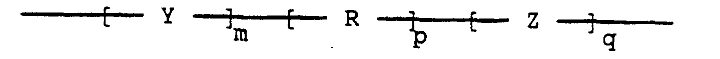 dans laquelle Y et Z représentent indépendamment un atome d'oxygène ou de soufre et R représente une chaîne aliphatique linéaire ou ramifiée, saturée ou non, renfermant jusqu'à 24 atomes de carbone.

Dans cette formule, m, p et q peuvent être indépendamment égaux à 0 ou à 1.

Les 2 autres formules représentent les différentes possibilités de disubstitutions d'un groupement naphtalène, soit sur chacun des deux cycles, soit sur un seul cycle.

Pour les copolyesters conformes à l'invention, Ar répond à l'une ou l'autre des conditions suivantes.

Les liaisons qui relient Ar aux groupements 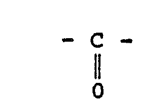 ou - 0 - sont:
1) soit parallèles et/ou sensiblement parallèles : dans ce cas, les unités de récurrence correspondantes sont considérées comme linéaires.
2) soit orientées dans des directions non parallèles ; dans ce cas, les unités de récurrence correspondantes sont considérées comme non linéaires.

Par liaisons "parallèles", on entend notamment les liaisons qui sont disposées
- soit en position 1,4 d'un cycle phénylène ou d'un groupement naphtylène,
- soit en position para, para d'un groupement biphénylène,
- soit en position para, para d'un groupement terphénylène, ce qui correspond aux formules suivantes :

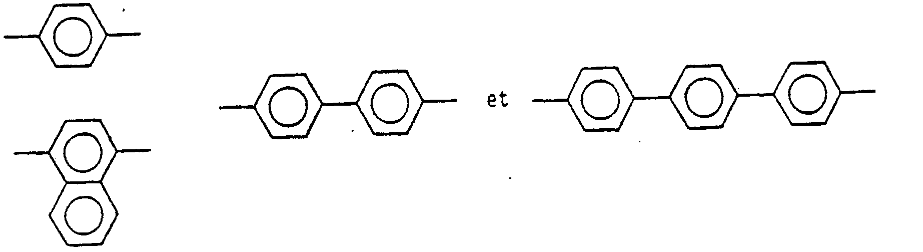

Par liaisons "sensiblement parallèles", on entend les autres dispositions de liaison dans des directions (plutôt) parallèles, et notamment les liaisons disposées diagonalement sur des cycles condensés tels que pour le radical naphtylène -2,6 ou le radical diphényl éther -3,4 :

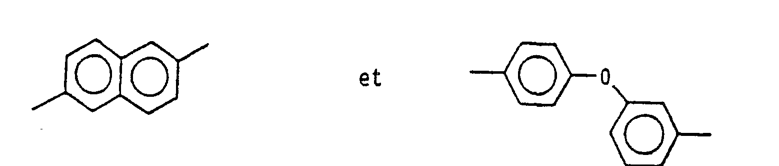

Comme indiqué ci-dessus, on considère que les unités de ce type sont linéaires, ce qui est donc le cas des unités de récurrence IV.

Les formules suivantes représentent à titre non limitatif les structures linéaires que - Ar - peut symboliser : 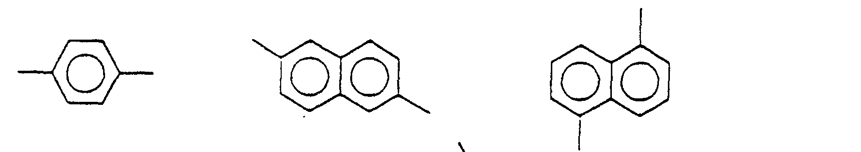 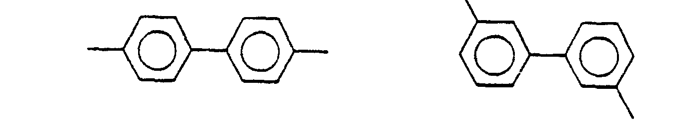 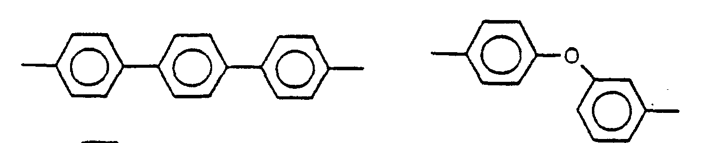 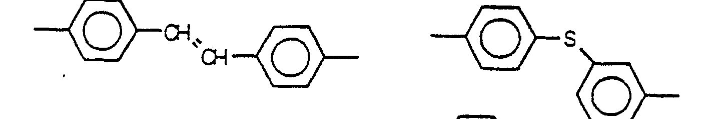 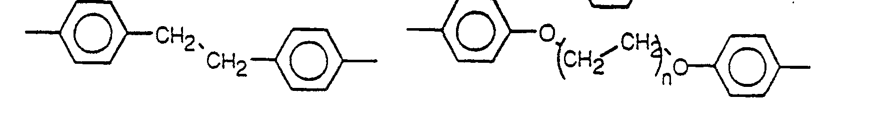 avec n = 1,2,3

Les formules suivantes représentent à titre non limitatif les structures non linéaires que Ar peut symboliser :

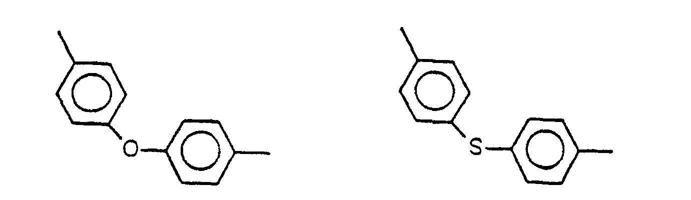

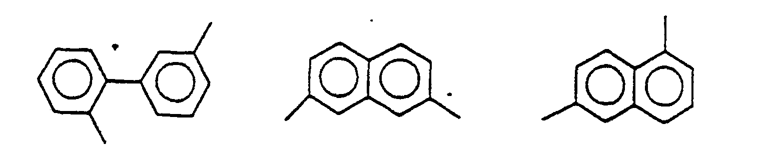

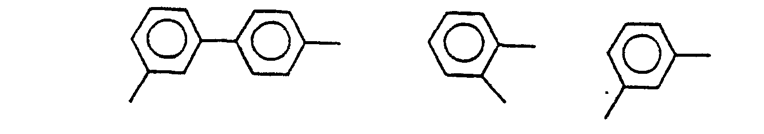

Le radical divalent Ar₁ peut également représenter un radical cycloaliphatique ; dans ce cas l'unité de récurrence II correspondante est considérée comme étant non linéaire.

Les copolyesters selon l'invention particulièrement préférés par la demanderesse sont ceux dont la teneur en unités de récurrence non linéaires est inférieure ou égale à 60 % en mole.

Les noyaux et cycles des unités de récurrence 1 à IV telles que définies précédemment peuvent être substitués par des radicaux monovalents et notamment ceux :
- de type alkyle ou alkoxy, linéaire ou ramifié respectivement de formule - CₙH₂ₙ₊₁ et - 0 CₙH₂ₙ₊₁ avec n en général compris entre 1 et 24
- de type aromatique comprenant en général de 6 à 24 atomes de carbone
- ou par des atomes, notamment des halogènes tels que chlore, brome... lesdits radicaux alkyles, alkoxy et/ou aromatiques pouvant être eux-mêmes substitués par des radicaux monovalents différents tels que définis ci-dessus.

Les unités de récurrence 1 sont en général issues de l'acide para hydroxy para phénoxy benzoïque et/ou d'un ou plusieurs de ses dérivés tels que ses esters, notamment les acétates, par exemple l'acide para acétoxy para phénoxy benzoïque ; on considère les unités de récurrence I comme étant non linéaires.

Les unités de récurrence Il proviennent généralement de diacides carboxyliques aromatiques et/ou cycloaliphatiques, et/ou de leurs dérivés tels que leurs diesters. Ils peuvent être utilisés soit seuls, soit en mélanges. Les diacides aromatiques préférés, sont l'acide téréphtalique, l'acide isophtalique, les dicarboxy-4,4 et -3,4'diphényléthers, les dicarboxy-4,4 et -3,4'diphényl sulfures, les dicarboxy-4,4 et -3,3'biphényles, le dicarboxy4,4" paraterphényle, le dicarboxy-2,6 naphtalène, le dicarboxy-2,7 naphtalène, les dicarboxy-1,5, -1,4 et -1,3 naphtalènes, le dicarboxy-4,4 diphénoxy-1,2 éthane, le dicarboxy 4,4 diphénoxy-1,4 butane, le dicarboxy-4,4 diphénoxy-1,6 hexane, le dicarboxy-4,4 (trans) stilbène.

Parmi les diacides cycloaliphatiques préférés on peut citer : le dicarboxy-1,4 cyclohexane sous la forme cis et/ou trans.

Les unités de récurrence III proviennent généralement d'un diphénol et/ou de ses dérivés tels que les diesters. Ils peuvent être utilisés soit seuls soit en mé)anges. Les diphénols préférés sont : l'hydroquinone, la chlorohydroquinone, la bromohydroquinone, la méthylhydroquinone, l'éthylhydroquinone, la phénylhydro- quinone, le résorcinol, les dihydroxy-4,4' et -3,3' biphényles, les dihydroxy-4,4' et -3,4'diphényl éthers, les dihydroxy-4,4 et -3,4'diphényl sulfures, le dihydroxy-4,4 (trans) stilbène, le dihydroxy-2,6 naphtalène, les dihydroxy-1,5, -1,4 et -1,3 naphtalènes, le dihydroxy-2,7 naphtalène.

Les unités de récurrence IV sont en général issues de l'acide parahydroxy benzoïque et/ou d'un ou plusieurs de ses dérivés.

A titre d'exemple de dérivés (substitués) de l'acide p-hydroxy benzoïque conformes à l'invention, on peut citer l'acide hydroxy-4 méthoxy-3 benzoïque, l'acide hydroxy-4 méthyl-2 benzoïque, l'acide hydroxy-4 méthyl-3 benzoïque, l'acide éthyl-3 hydroxy-4 benzoïque, l'acide éthyl-2 hydroxy-4 benzoïque, l'acide hydroxy-4 phényl-3 benzoïque et l'acide hydroxy-4 phényl-2 benzoïque.

La masse moléculaire moyenne en nombre des copolyesters conformes à l'invention est de préférence comprise entre 3 000 et 50 000 et avantageusement entre 5 000 et 40 000.

L'invention concerne également le procédé de fabrication des copolyesters décrits ci-dessus.

Les copolyesters thermotropes selon l'invention peuvent notamment être obtenus par polycondensation de mélange de monomères à savoir :
- l'acide p-(hydroxy p-phénoxy) benzoïque ou l'un de ses dérivés
- un (ou des) diacide(s) aromatique(s) ou aliphatique(s) - plus brièvement aromatique(s) - ou leurs dérivés - un (ou des) diphénol(s) ou leurs dérivés,
- l'acide p-hydroxy benzoïque et/ou un acide p-hydroxy benzoïque ou l'un de leurs dérivés, les cycles aromatiques ou aliphatiques desdits monomères (et/ou leurs dérivés) ci-dessus ainsi que ceux définis dans les procédés ci-après pouvant éventuellement être substitués par les radicaux définis plus haut.

La réaction de polycondensation s'effectue généralement sous atmosphère inerte à une température comprise entre 100° et 450° C et de préférence entre 150 et 400 C, sous agitation.

Durant la polycondensation, la pression au sein du milieu réactionnel peut être réduite à tout instant jusqu'à environ 5 Pa. Les sous-produits formés tels qu'un acide, un phénol, de l'eau ou encore les réactifs qui n'ont pas réagis, peuvent être éliminés du milieu réactionnel durant toute la durée de la polycondensation, sous atmosphère inerte et/ou sous pression réduite.

Les copolyesters selon l'invention peuvent plus précisément être préparés selon différents procédés de polycondensation notamment :
^{*} Par polycondensation directe entre :
l'acide p-(hydroxy p-phénoxy) benzoïque

. un (ou des) diacides(s) aromatique(s) de formule (HOOC - Ar₁ - COOH)
. un (ou des) diphénol(s) de formule (HO - Ar₂ - OH)
l'acide p-hydroxy benzoïque et/ou l'un ou plusieurs de ses dérivés.

Les différents composants peuvent être introduits dans le milieu réactionnel dans un ordre quelconque, séparément ou ensemble. S'ils peuvent être introduits en mélange, ils peuvent également être introduits les uns après les autres, partiellement ou en totalité, en cours de réaction. La réaction peut être schématisée par l'équation suivante : - COOH + HO- - - COO - + H₂0

Les copolyesters ainsi obtenus présentent généralement des groupements terminaux carboxyliques et/ou phénoliques (- COOH et/ou - OH). * Par polytransestérification entre :
. un ou plusieurs esters de l'acide p-(hydroxy p-phénoxy) benzoïque de formule : 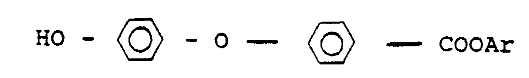 =. un (ou des) diester(s) aromatique(s) (ArOOC - Ar₁ -COOAr) . un (ou des) diphénol(s) (HO - Ar₂ - OH)
. un ou plusieurs esters de l'acide p-hydroxy benzoïque et/ou un ou plusieurs esters de ses dérivés (substitués) de formule :

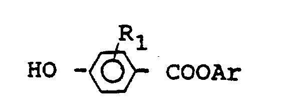

La réaction peut être schématisée par l'équation suivante -COOAr + HO - -- COO - + Ar OH

Dans ce procédé, on choisit de préférence de faire réagir les groupements phénoliques des différents monomères avec des esters aromatiques; ces derniers peuvent être obtenus selon toute réaction d'estérification entre :
. un groupement carboxylique et un phénol
- COOH + HO - Ar →~ COO Ar + H₂0
. le chlorure d'acide d'un groupement carboxylique et un phénol
- COCI + HO - Ar →~ COO Ar + HCI
. un groupement carboxylique et un diaryl carbonate 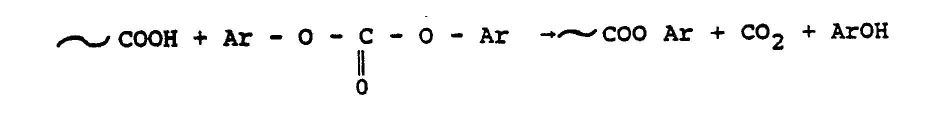 Si l'on choisit de préparer les esters aromatiques selon les deux premières réactions décrites ci-avant, on préfère les synthétiser dans une première étape avant même toute réaction de polycondensation. Par contre, dans le cas où l'on choisit d'utiliser le diaryl carbonate pour préparer ces fonctions esters aromatiques, on peut :
- soit préparer dans une première étape les esters aromatiques par réaction des monomères porteurs de fonctions carboxyliques avec le diaryl carbonate en l'absence du (ou des) diphénol(s), puis introduire dans une seconde étape ce(s) dernier(s), (dans un ordre quelconque, séparément ou ensemble, en totalité ou partiellement durant la réaction de polycondensation proprement dite).
- soit introduire les différents composants dans le milieu réactionnel, dans un ordre quelconque, séparément ou ensemble, en présence du diaryl carbonate servant à estérifier les fonctions carboxyliques. Dans ce cas, les deux réactions (estérification des fonctions carboxyliques et polycondensation) ont lieu successivement, mais sans réelle différenciation dans le temps.

Parmi les diaryl carbonates pouvant être utilisés, on choisit de préférence le diphényl carbonate. Dans ce cas, le produit formé lors de la réaction de polytransestérification est du phénol.

Les copolyesters obtenus présentent généralement des groupements terminaux phénoliques et/ou d'esters aromatiques (-OH et/ou- COO Ar).

* Par réaction de polytransestérification dite d'acidolyse entre :
. un ester de l'acide p-(hydroxy p-phénoxy) benzoïque au niveau de la fonction phénol et/ou un ou plusieurs esters de ses dérivés (substitués), également au niveau de la fonction phénol 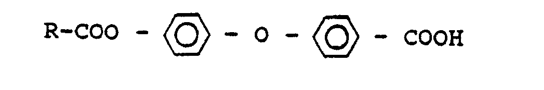
. un (ou des) diacide(s) aromatique(s) HOOC - An - COOH
. un (ou des) diester(s) de diphénol(s) RCOO - Ar₂ - OOCR
. un ester de l'acide p-hydroxy benzoïque au niveau de la fonction phénol

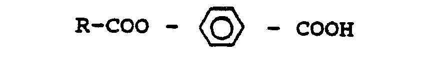

La réaction peut être schématisée par l'équation suivante : 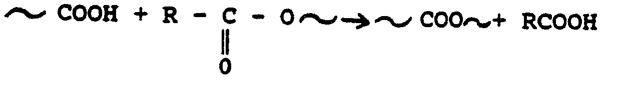 Dans ce procédé particulièrement préféré par la demanderesse, on choisit de faire réagir les groupements carboxyliques des différents monomères avec des esters d'acide alcanoïque au niveau de la fonction phénolique.

Ces esters peuvent être obtenus selon toute réaction d'estérification entre : un groupement phénolique et l'acide alcanoïque - OH + HOOC - R - -0 - CO - R + H₂0
. un groupement phénolique ou son sel et le chlorure de l'acide alcanoïque 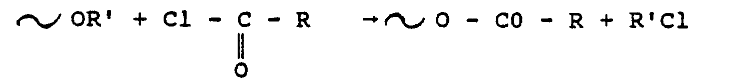 avec R' = H, Na, K,...
. un groupement phénolique et un anhydride d'acide aliphatique 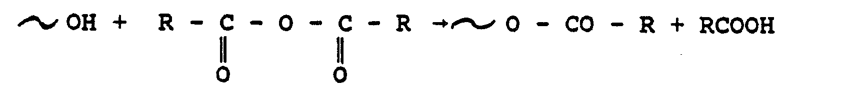 Si l'on choisit de préparer ces esters selon les deux premières réactions décrites ci-avant, on préfère les synthétiser dans une première étape avant toute réaction de polycondensation. Par contre, dans le cas où l'on choisit d'utiliser un anhydride pour modifier les fonctions phénoliques, on pourra :
- soit préparer dans une première étape ces esters par réaction des monomères porteurs des fonctions phénoliques avec l'anhydride en l'absence du (ou des) diacide(s) aromatiques, puis introduire dans une seconde étape ce(s) dernier(s) dans un ordre quelconque, séparément ou ensemble, en totalité ou partiellement, durant la réaction de polycondensation proprement dite,
- soit introduire les différents composants dans le milieu réactionnel, dans un ordre quelconque, séparément ou ensemble, en présence de l'anhydride d'acide aliphatique servant à estérifier les fonctions phénoliques. Dans ce cas, les deux réactions (estérification des fonctions phénoliques et polycondensation) ont lieu successivement, mais sans réelle différenciation dans le temps.

Parmi les acides alcano'lques ou leur chlorure pouvant être utilisés, on choisit de préférence des acides ou leur chlorure ayant de 2 à 6 atomes de carbone et de façon avantageuse l'acide acétique. Concernant les anhydrides, on choisit de préférence les anhydrides issus d'acides alcano'iques ayant de 2 à 6 atomes de carbone et de façon avantageuse l'anhydride acétique. Dans ce cas, le produit formé lors de la réaction d'acidolyse est de l'acide acétique.

Les copolyesters ainsi obtenus présentent généralement des groupements terminaux carboxyliques et/ou d'esters de fonctions phénoliques (- COOH et/ou - OCOR avec R = CₙH₂ₙ₊₁ avec n = 1 à 5).

Quel que soit le procédé de polycondensation, on peut utiliser et incorporer des catalyseurs dans le milieu réactionnel à tout stade de la réaction. Leur quantité est en général de l'ordre de 0,001 % à 2 % en poids basée sur la charge initiale totale en monomères, et plus précisément de l'ordre de 0,01 % à 0,5 % en poids. Plusieurs catalyseurs peuvent être utilisés en même temps. Parmi les catalyseurs connus pour accélérer les réactions de polycondensation ou de transestérification, on peut citer par exemple les acides de Lewis, les oxydes, les hydrures, les hydroxydes, les alcoolates, les phénolates, les sels d'acide minéraux ou organiques, les sels complexes ou mixtes de métaux alcalins ou alcalino-terreux. De façon avantageuse, on utilise l'acétate de sodium, l'acétate de potassium, l'acétate de calcium, l'acétate de magnésium, l'acétate de zinc, l'acétate de cobalt, le trioxyde d'antimoine, le benzoate de calcium, le tétra-butylate de titane, le tétra-butylate de zirconium, et de préférence l'acétate de magnésium, l'acétate de manganèse, l'acétate de sodium, l'acétate de potassium, et l'acétate de zinc.

Outre les monomères servant à la réalisation des différentes entités présentes dans le copolyester final, il est également possible d'incorporer dans le milieu réactionnel des composés monofonctionnels, dont le rôle est de limiter la masse moléculaire du polymère final. D'un point de vue pratique, afin de respecter un niveau de propriétés thermomécaniques optimal du copolyesterl la quantité de tels composés par rapport au total des autres monomères ne dépasse en général pas 2 % en mole, et de préférence 1 %, afin d'obtenir des masses moléculaires relativement importantes. Parmi les composés susceptibles d'être utilisés, on peut citer le β naph tol, le paranonyl phénol, l'hydroxy-4 diphényle) le carboxy-2 naphtalène ou l'un de ses isomères. En fonction du procédé de polycondensation choisi, ces composés peuvent être modifiés en esters aromatiques ( - COO Ar) ou en esters de phénols (-0-COR) selon la nature de la fonction portée par le composé. D'un point de vue pratique, ces composés peuvent être incorporés dans le milieu réactionnel avec la totalité des monomères, ou indifféremment à tout stade de la réaction. La présence de ces composés a pour effet de modifier la nature de certaines extrémités de chaîne.

D'une manière générale, les copolyesters, selon l'invention, peuvent être obtenus de façon préférentielle selon le procédé d'acidolyse décrit précédemment. Là réaction s'effectue d'une façon générale entre 100° C et 400 C, sous atmosphère inerte et sous agitation, en particulier lorsque l'on utilise les monomères sous la forme acide et phénol (estérification in situ des fonctions phénols), ou à une température comprise entre 230 et 400 C lorsque l'on utilise directement les monomères à fonctions phénoliques sous la forme d'esters d'acide alcanoïque.

On commence généralement la réaction à basse température que l'on augmente progressivement durant la réaction. La réaction est menée sous atmosphère inerte jusqu'à un taux de conversion de l'ordre de 80 %. Lorsque la distillation de l'acide formé lors de la condensation, en général l'acide acétique, s'amenuise, la polycondensation est poursuivie sous un vide plus ou moins important pouvant aller jusqu'à 5 Pa. Cette mise sous vide est effectuée généralement par paliers successifs. Durant la phase finale de la réaction, on a tendance, en fonction de l'augmentation de la viscosité du milieu réactionnel, à réduire la vitesse d'agitation.

Les exemples suivants illustrent l'invention sans toutefois la limiter.

Le point de fusion de chaque polycondensat a été déterminé par analyse thermique différentielle.

La plage d'anisotropie a été déterminée d'après l'examen d'un échantillon de chaque polycondensat à l'aide d'un microscope équipé d'une platine chauffante THM 600 asso ciée au programmateur de température TMS 90 de LINKAM entre lames de verre pour une vitesse de montée en température de l'ordre de 5 à 20° C par minute.

La contrainte et le module en traction sont exprimés en MPa, et l'allongement à la rupture en %, suivant la norme ISO R 527.

La contrainte et le module en flexion sont exprimés en MPa selon la norme ISO 178.

L'analyse visco-élastique des copolyesters a été effectuée à l'aide d'un appareil RHEOMETRIX 800. Le module élastique G' en torsion a été déterminé sous une fréquence de 10 Hz entre -140 et 250 C avec une vitesse de chauffage de 5 C par mn.

Dans les exemples qui suivent, on désigne par a, b, c et d les quantités des unités de récurrence respectivement I, II, III et IV par rapport à la somme de toutes les unités de récurrence ; a, b, c et d sont exprimés en % en mole dans les exemples et pour une mole dans les Tableaux.

### EXEMPLE 1 comparatif

Dans un réacteur de polycondensation en verre de 250 cm3, agité, muni d'un dispositif permettant le balayage du milieu réactionnel par un gaz inerte, équipé d'une colonne de distillation, prolongée par un réfrigérant et une éprouvette graduée destinée à récupérer les effluents formés lors de la réaction, on introduit les réactifs suivants :
a) acide para (acétoxy para phénoxy)benzoïque (PAPB) : 54,45 g(0,2 mole)
d) acide para acétoxy benzoïque (PAB) : 36,03 g (0,2 mole)

Dans ces conditions le rapport d / a est égal à 1.

Le réacteur est purgé à l'azote, puis plongé sous balayage d'azote dans un bain métallique régulant à 240 C. Après quelques minutes, la première goutte d'acide acétique distille (tₒ de la réaction). Après 15 minutes à cette température, la quantité d'effluents recueillis, 9 cm3, correspond à 39,3 % de la quantité d'acide acétique théorique. La température du bain métallique est par la suite augmentée progres sivement en 10 minutes jusqu'à 280 C, température à laquelle la réaction est continuée pendant 15 minutes. A la fin de ce palier, on a récupéré 78,6 % en poids de l'acide acétique théorique. Puis la température du bain métallique est portée à 300 C en l'espace de 10 minutes et la réaction est poursuivie 30 mn à cette température.

A la fin de ce second palier on a récupéré 83,3 % en poids de la quantité d'acide acétique théorique - soit 20 g.

La pression au sein du réacteur est alors diminuée progressivement de 1008.10² Pa à 27 Pa et dans le même temps, la température du bain métallique est portée à 400° C en 35 mn.

Après 120 minutes de réaction (85 sous atmosphère inerte puis 35 sous pression réduite) on a récupéré au total 22,5 cm³ d'acide acétique, soit 98,2 % de la théorie.

Le polymère obtenu est fibreux et brun clair. Sa température de fusion est de 352° C. Ce polymère est anisotrope dès la fusion jusqu'à plus de 380° C.

Après avoir été granulé, séché sous vide à 80° C pendant 6 heures, et moulé sur une presse Mining MCP 25 SA à la température de 375°C pour une température de moule de 150°C sous forme d'éprouvettes normalisées, les essais de traction et de flexion réalisés sur ce polymère ont conduit aux valeurs suivantes :
- Contrainte en traction : 18 MPa
- Allongement à la rupture : 0,6 %
- Contrainte en flexion : 64 MPa
- Module de flexion : 3375 MPa

Ce copolyester comprend les entités suivantes : 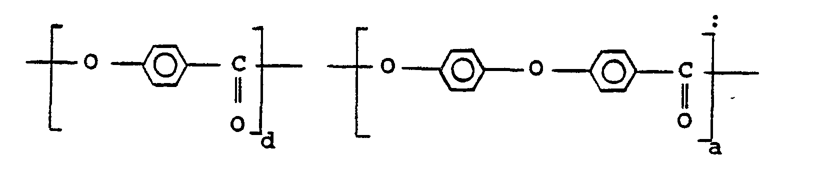 avec a = 50 % et d = 50 %

### EXEMPLES 2 à 5 comparatifs

Ils concernent la préparation de copolyesters aromatiques obtenus à partir :
a) d'acide para (acétoxy para phénoxy)benzoïque (PAPB)
b) d'acide téréphtalique (T)
c) de diacétate d'hydroquinone (HQdiAc)
d) d'acide para acétoxy benzoïque (PAB) avec (b + c) égal au plus à 5 % en mole du mélange a + b + c + d.

Ces copolyesters ont été préparés dans un réacteur de polycondensation agité de 80 cm³, muni d'un dispositif permettant le balayage du milieu réactionnel par un gaz inerte, équipé d'une colonne de distillation, prolongée par un réfrigérant et une éprouvette graduée destinée à récupérer les effluents formés lors de la réaction.

Les conditions de synthèse sont identiques à celles de l'exemple 1. Elles sont résumées dans le tableau 1.

Le tableau 2 regroupe les principales caractéristiques de ces copolyesters, dont les structures sont détaillées dans le tableau 3.

N.B Les Exemples comparatifs 1 à 5 correspondent à des copolyesters décrits dans la demande de brevet J 63-101 416 au nom de ASAHI CHEMICAL.

### EXEMPLES 6 A 10

Ces exemples illustrent la synthèse et les caractéristiques de copolyesters entièrement aromatiques obtenus à partir :
a) d'acide para (acétoxy para phénoxy) benzoïque (PAPB)
b) d'acide téréphtalique (T)
c) de diacétate d'hydroquinone (HQdiAc)
d) d'acide para acétoxy benzoïque (PAB) avec b + c supérieur à 5 % en mole du mélange a + b + c + d

Les conditions de synthèse sont identiques à celles de l'exemple 1. Elles sont résumées dans le tableau 4.

Le copolyester dont la synthèse est décrite dans l'exemple 6 a été préparé dans un appareil de polycondensation identique à celui utilisé pour préparer le copolyester de l'exemple 1.

Les copolyesters dont les synthèses sont décrites dans les exemples 7 à 10 ont été préparés dans un appareillage de polycondensation identique à celui utilisé pour préparer le copolyester de l'exemple 2.

Le copolyester obtenu selon l'exemple 6 est fibreux et blanchâtre. Sa température de fusion est de 302° C. Ce polymère est anisotrope dès la fusion jusqu'à plus de 370 C. Après avoir été granulé, séché sous vide à 80° C et moulé sur une presse MINING MCP 25 S.A à la température de 315°C, pour une température de moule de 90° C, sous forme d'éprouvettes normalisées, les essais de traction et de flexion réalisés sur ce polymère ont conduit aux valeurs suivantes :
- contrainte en traction : 81 Mpa
- allongement à la rupture : 2,3 %
- contrainte en flexion : 114 Mpa
- module de flexion : 5345 Mpa

Par ailleurs les principales caractéristiques des copolyesters décrits dans les exemples 7 à 10 sont regroupées dans le tableau 5.

Les produits décrits dans les exemples 6 à 10 répondent aux formules données dans le tableau 6.

### EXEMPLES 11 A 15

Ces exemples illustrent la synthèse et les caractéristiques de copolyesters entièrement aromatiques obtenus à partir :
a) - d'acide para (acétoxy paraphénoxy) benzoïque (PAPB)
b) - d'acide téréphtalique (T) - d'acide isophtalique (I) - de dicarboxy-4,4 diphényléther (4,4 DCDPE)
c) - de diacétate d'hydroquinone (HQdiAc) - de diacétate de méthylhydroquinone (MeHQdiAc) - de diacétate de 4,4' dihydroxy biphényle (4,4' DHBPdiAc)
d) - d'acide para acétoxy méta méthoxy benzoïque (PAMB) - d'acide para acétoxy benzoïque (PAB)

Les conditions de synthèse sont identiques à celles de l'exemple 1. Elles sont résumées dans le tableau 7. Ces copolyesters ont été préparés dans un appareillage de polyconden sation identique à celui utilisé pour préparer le copolyester de l'exemple 2.

Les principales caractéristiques des produits obtenus sont regroupées dans le tableau 8. Leurs formules sont précisées dans le tableau 9.

### Evolution du module élastique G en fonction de la température

Afin d'évaluer cette propriété, les copolyesters obtenus selon les exemples 1, 5 et 6 ont été finement broyés, séchés sous vide à 80° C pendant 6 heures et moulés par compression.
- dimension des éprouvettes : 55 x 12,7 x 2 mm
- pression et durée de maintien : 2 tonnes pendant 10 minutes
- température du moule,
. copolyester de l'exemple 1 : 310° C
. copolyester de l'exemple 5 : 290° C
. copolyester de l'exemple 6 : 290° C

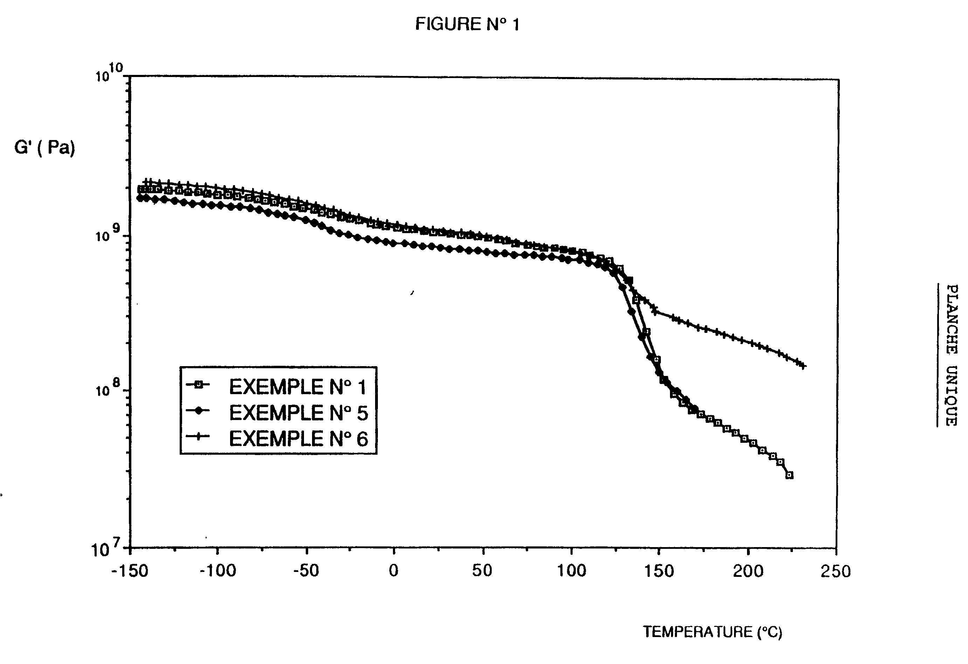

Après refroidissement et démoulage des barreaux l'analyse viscoélastique de ces copolyesters en fonction de la température a donné les résultats regroupés dans le tableau 10 (valeurs partielles). La figure 1 représente de façon plus précise l'évolution du module G en fonction de la température (représentation prenant en compte la totalité des valeurs).

On constate que le polyester de l'exemple 6 selon l'invention présente une meilleure conservation du module avec l'augmentation de la température.

### EXEMPLES 16 à 20

Ces exemples illustrent la synthèse et les caractéristiques de copolyesters entièrement aromatiques obtenus à partir :
a) d'acide para(acétoxy paraphénoxy)benzoïque (PAPB)
b) d'acide téréphtalique (T)
d'acide isophtalique (I)
c) de diacétate d'hydroquinone (HQ diAc) de diacétate de 4,4' dihydroxy biphényle (4,4' DHBP di Ac)
d) d'acide para acétoxy benzoïque (PAB)

Les conditions de synthèse sont identiques à celles de l'exemple 1. Elles sont résumées dans le tableau 11. Ces copolyesters ont été préparés dans un appareillage de polycondensation identique à celui utilisé pour préparer le copolyester de l'exemple 2.

Les principales caractéristiques des produits obtenus sont regroupées dans le tableau 12. Leurs formules sont précisées dans le tableau 13.

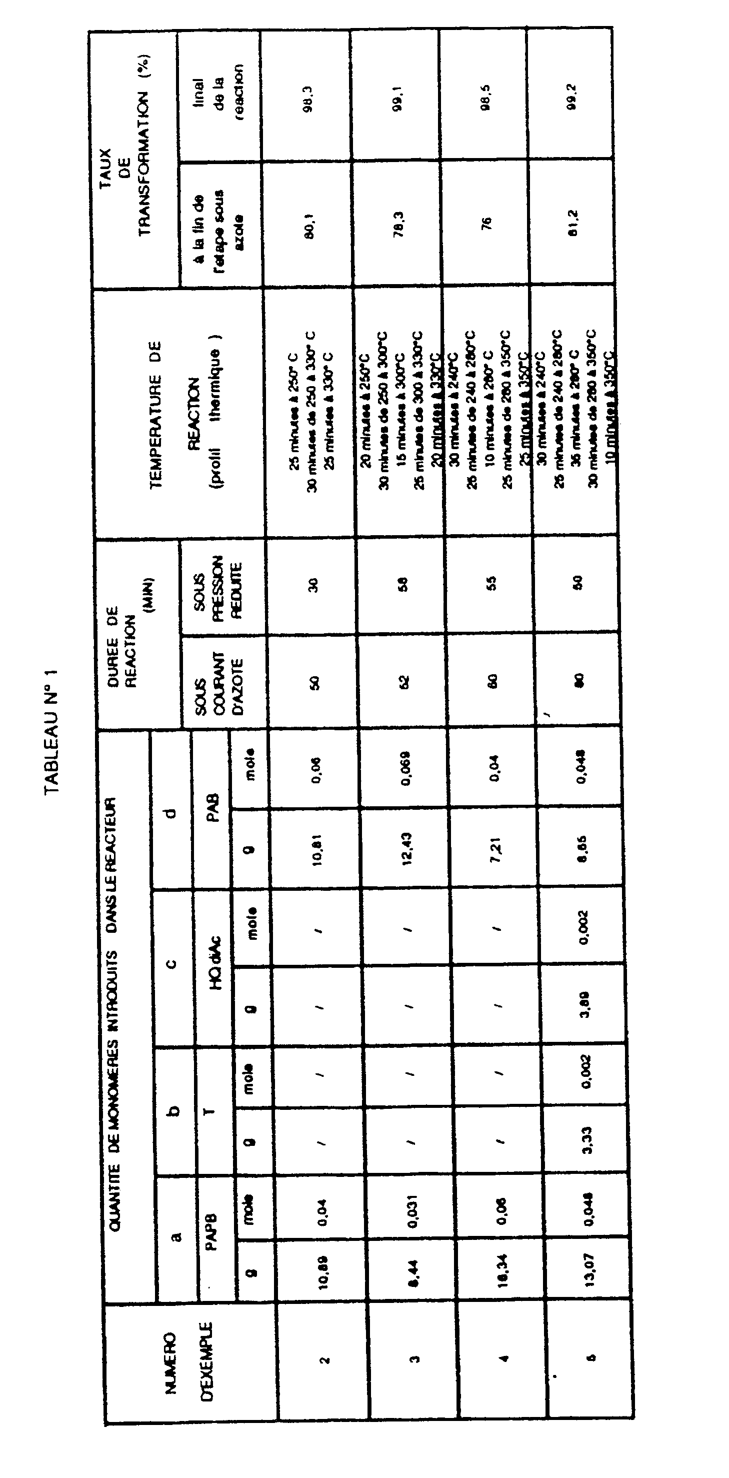

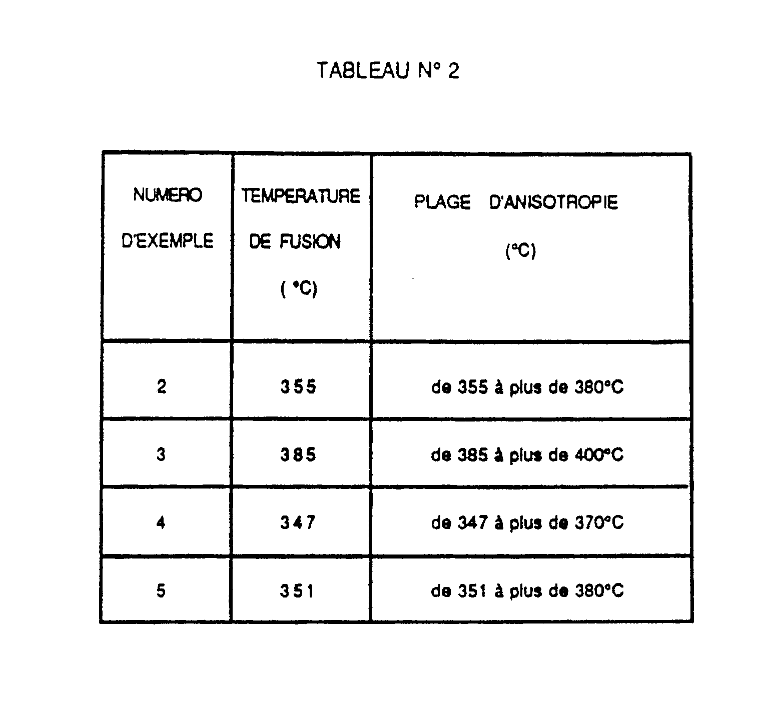

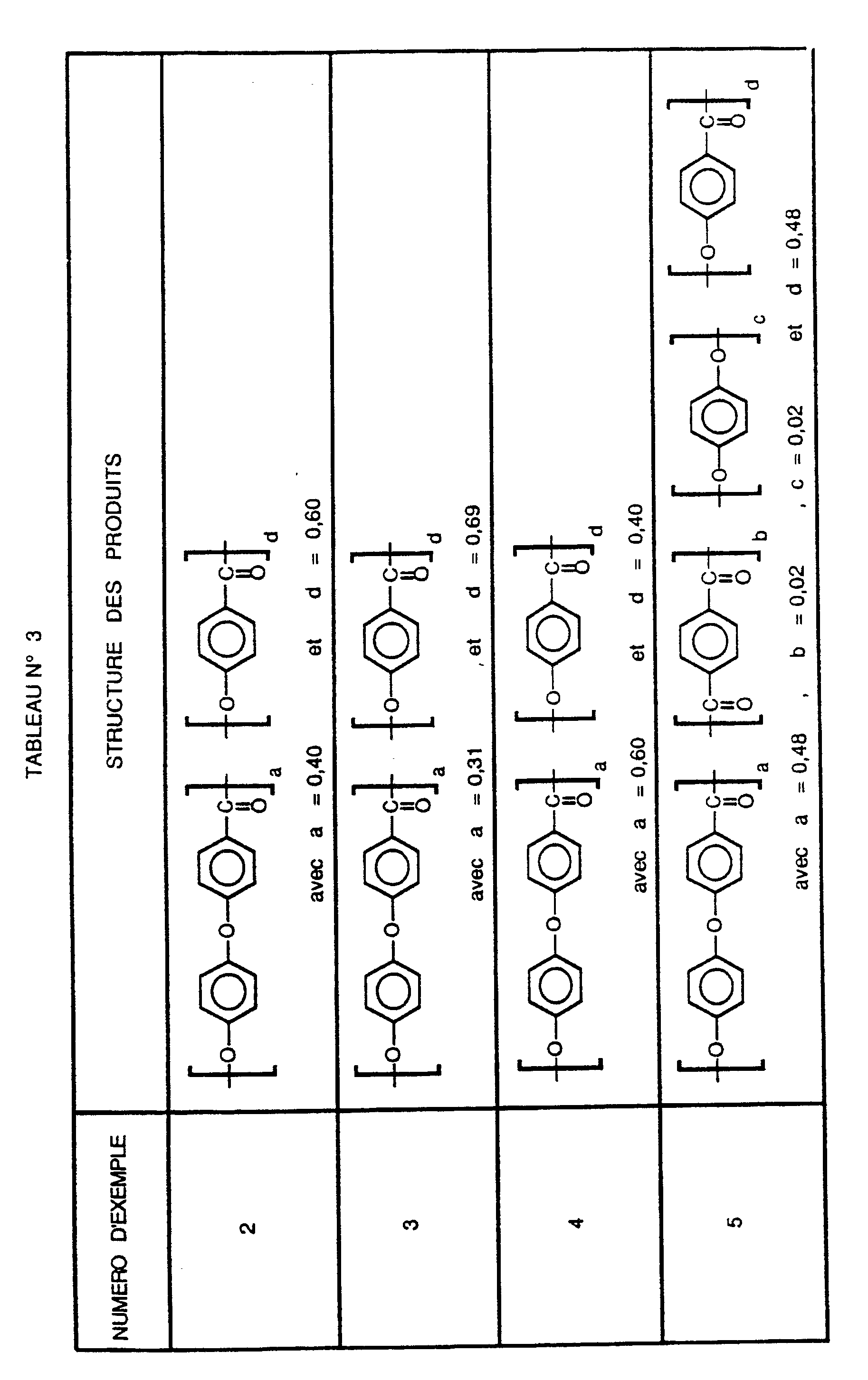

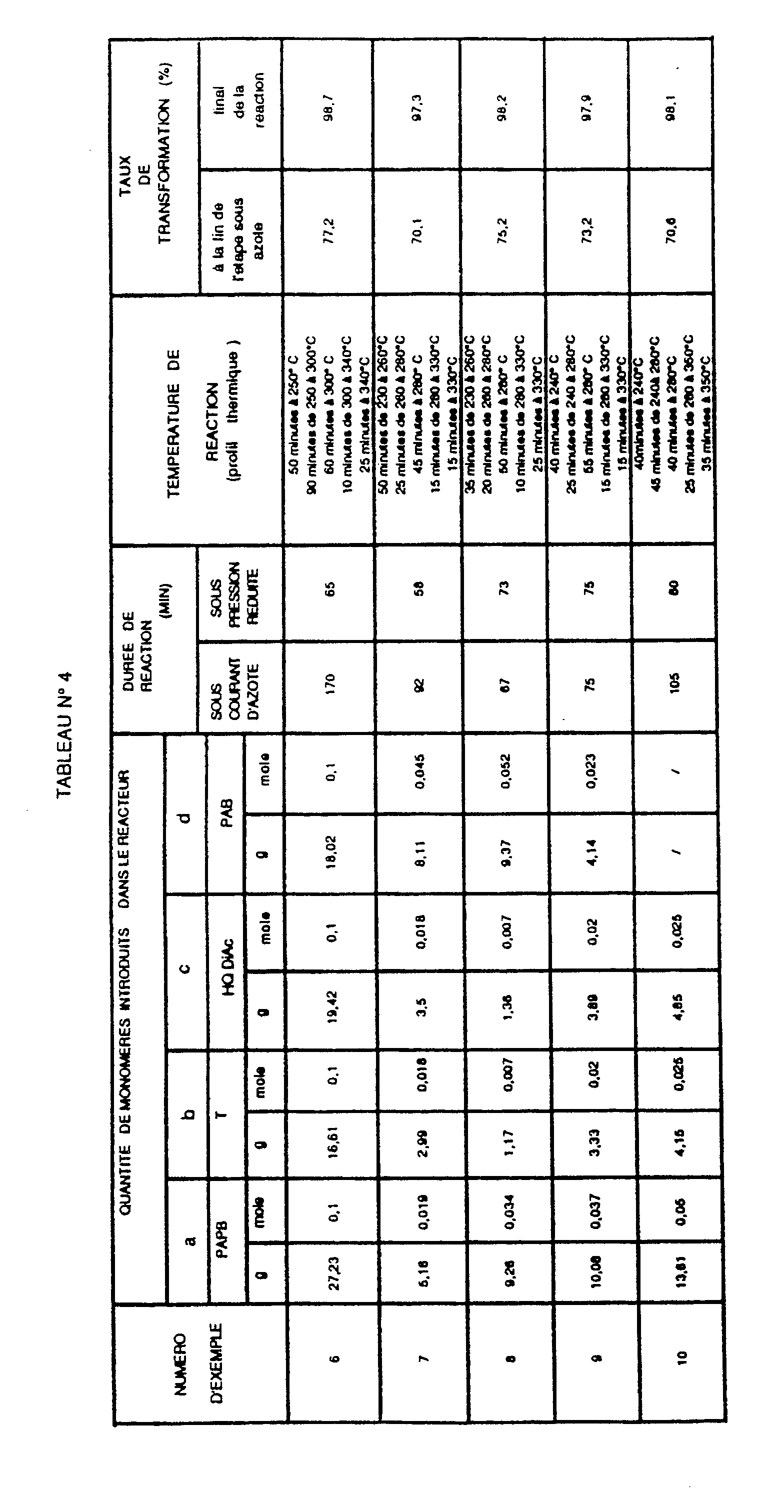

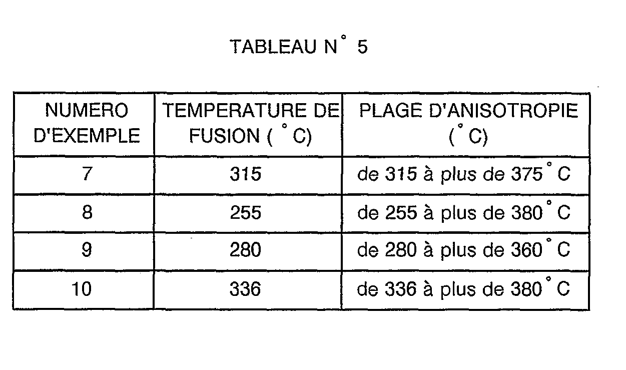

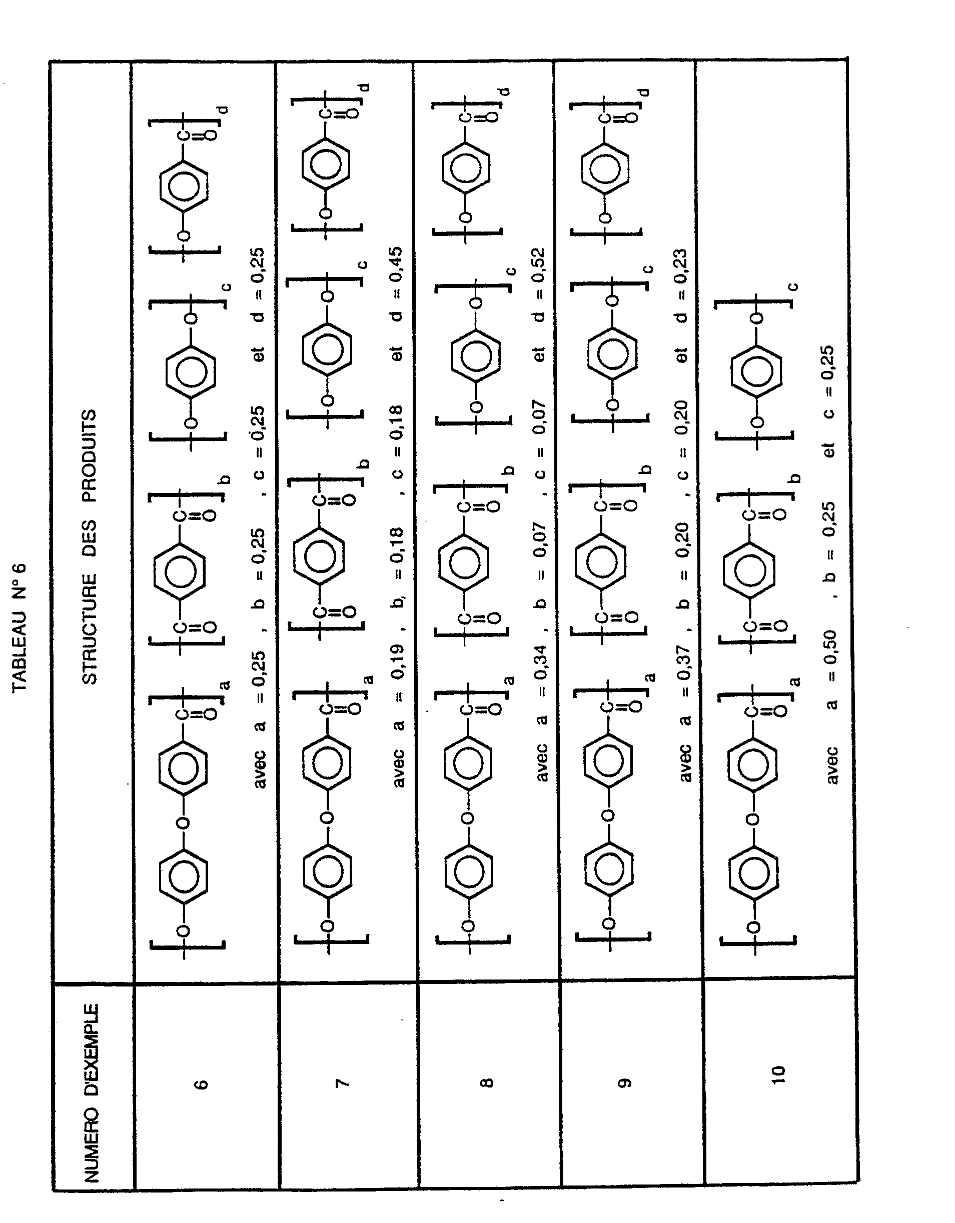

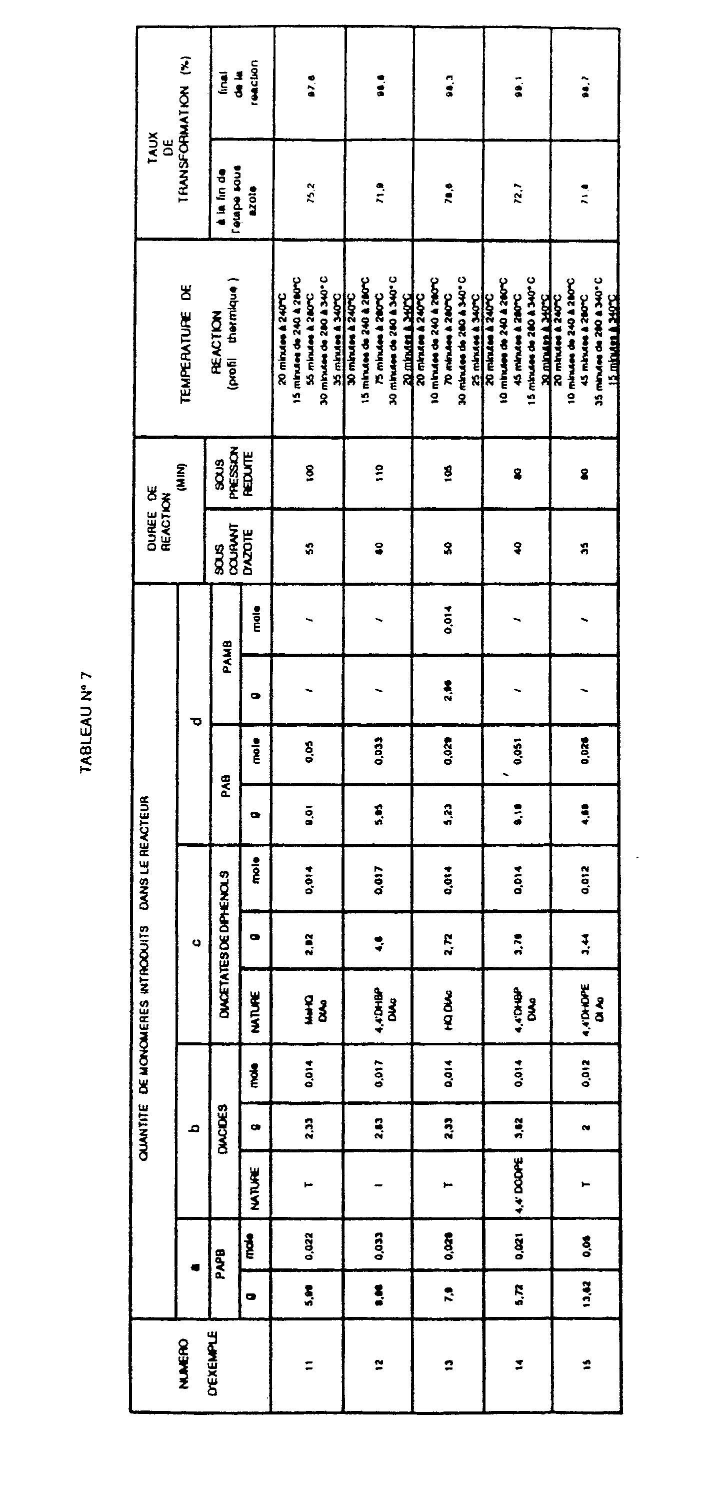

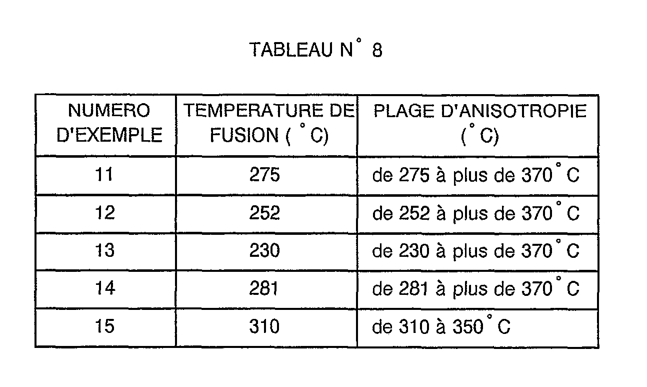

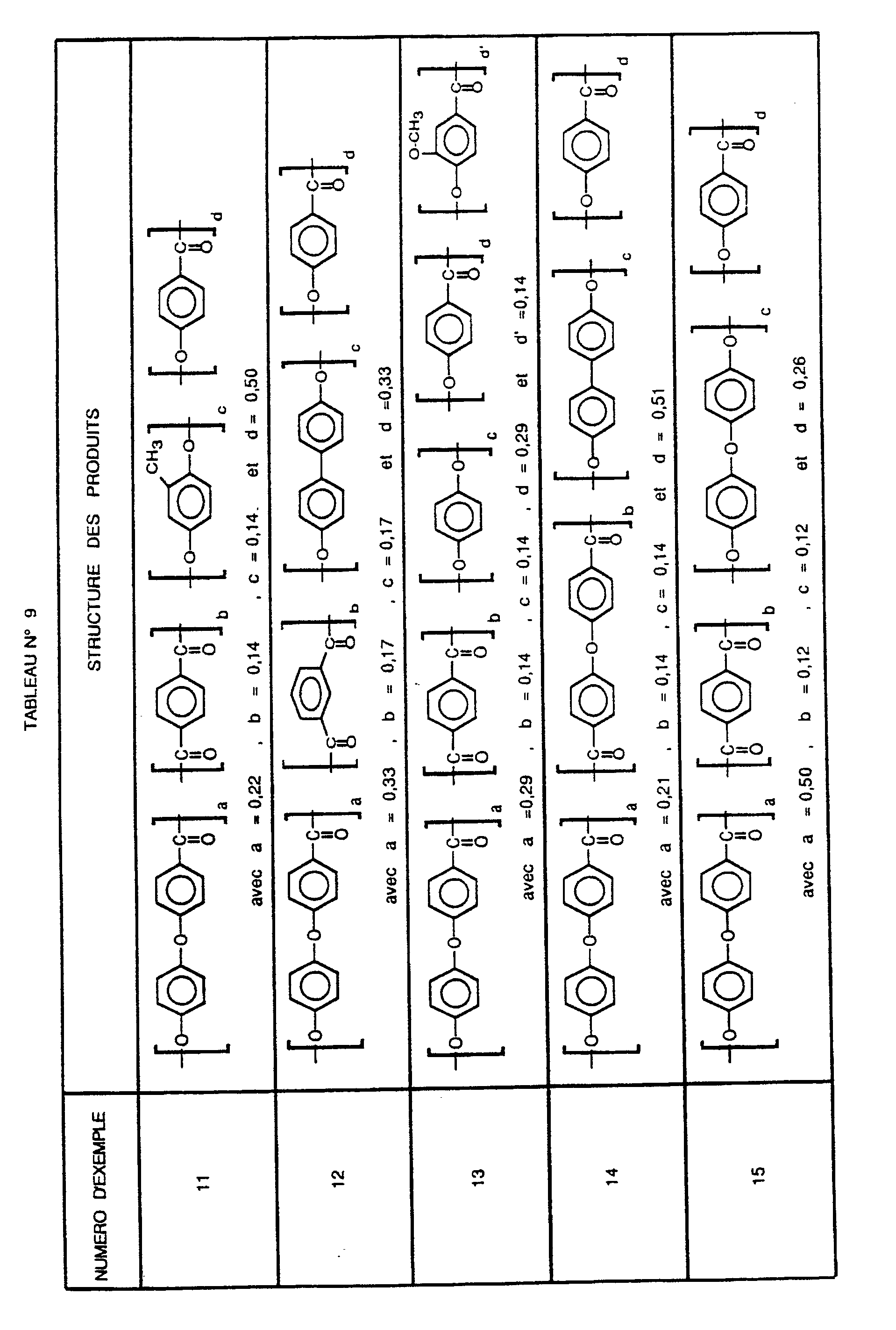

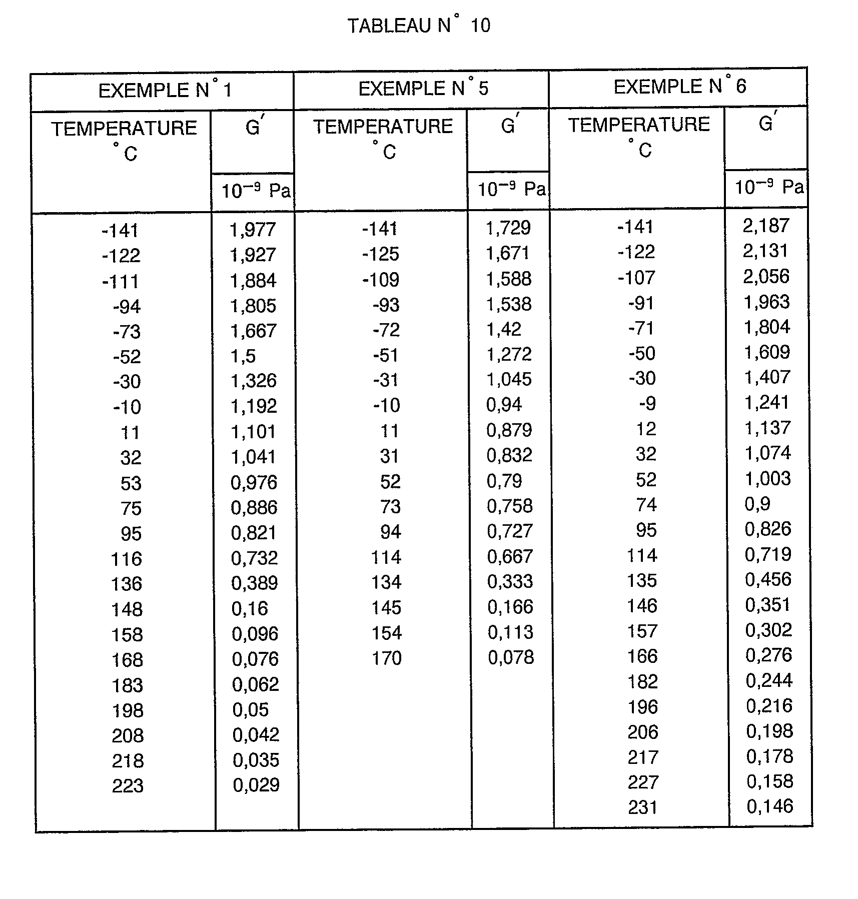

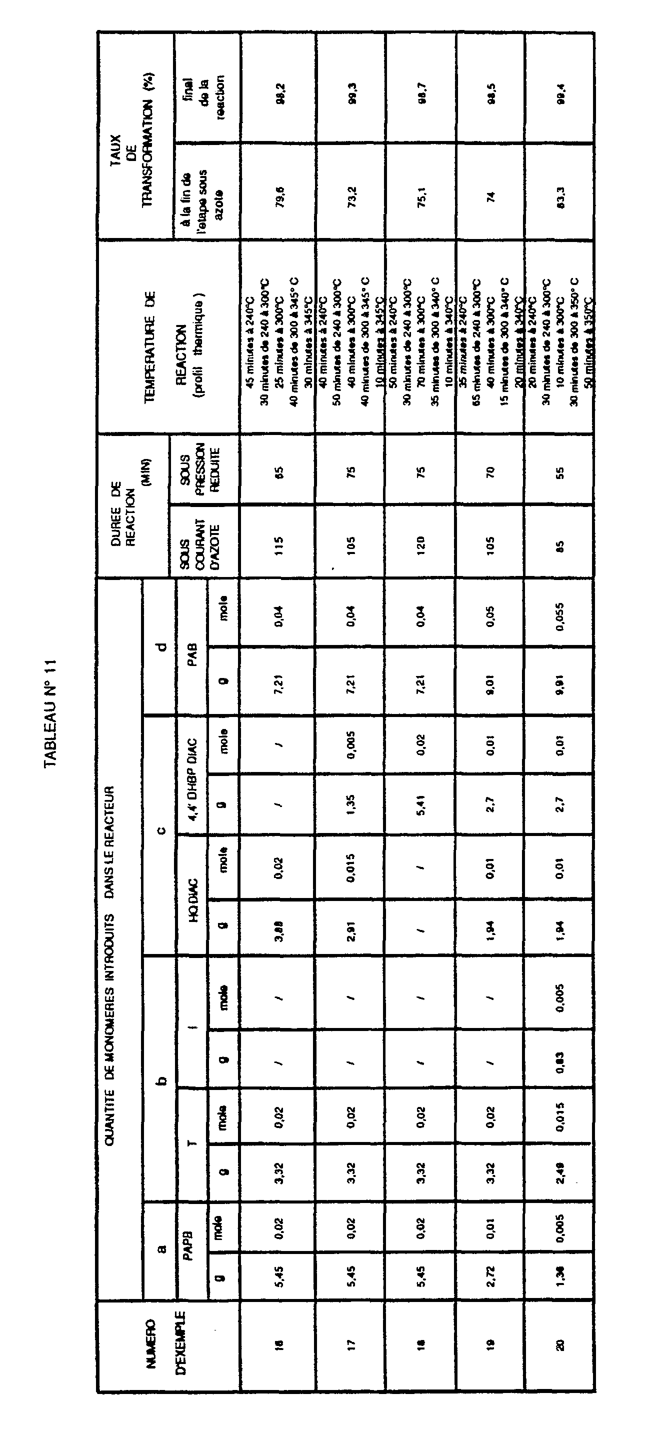

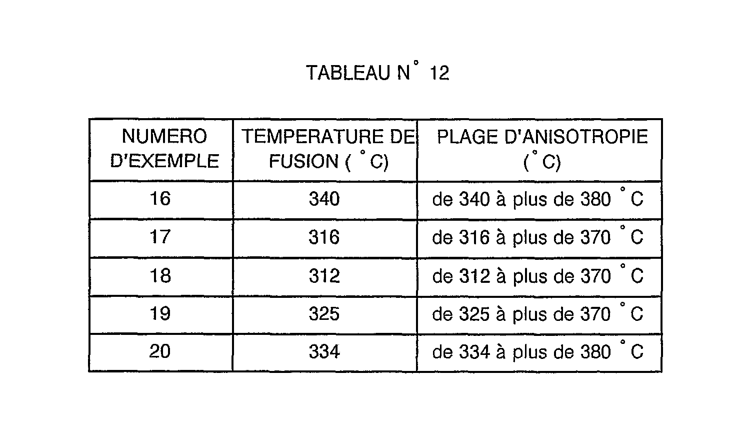

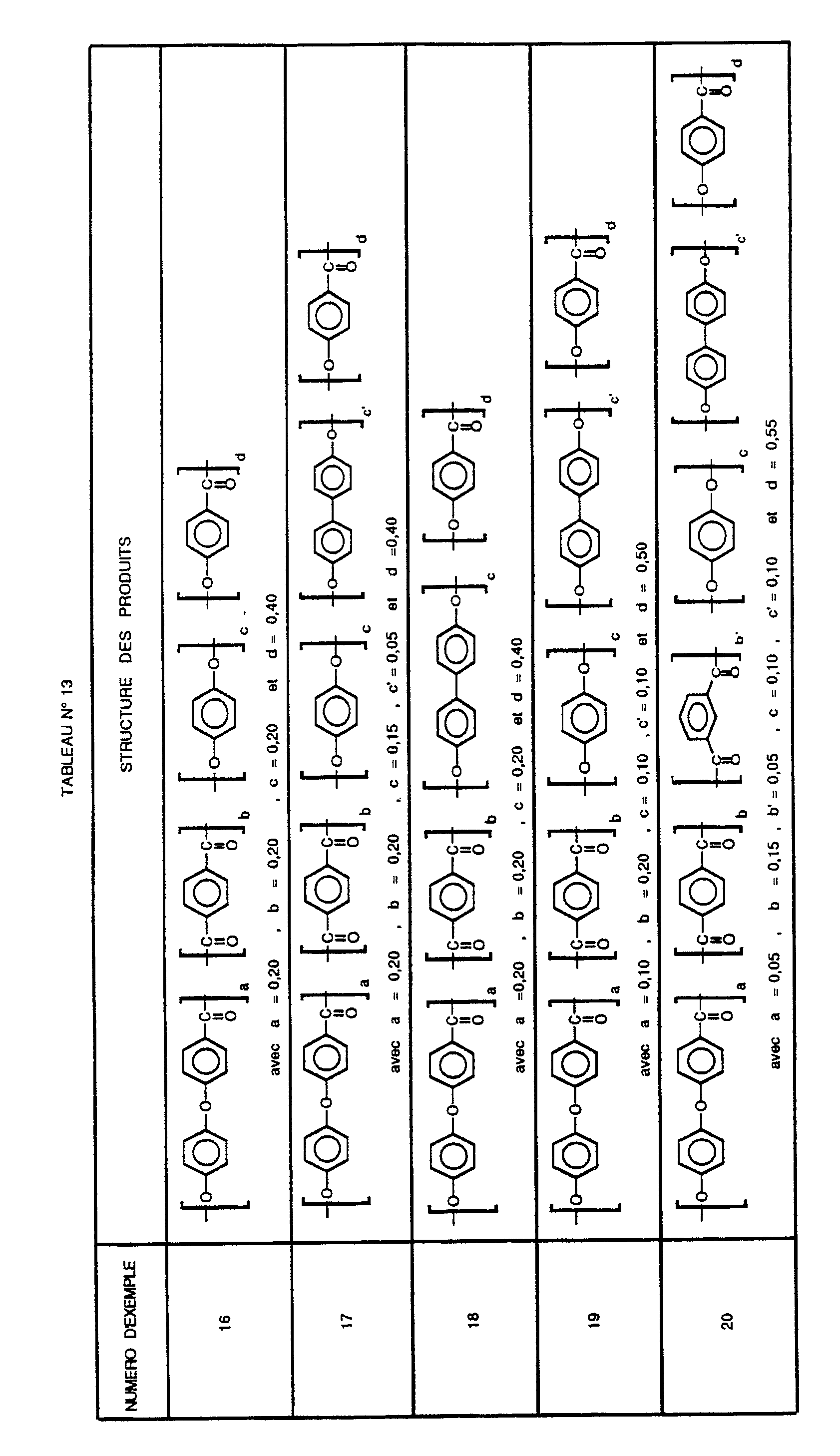

## Revendications

1. Copolyesters aromatiques thermotropes comprenant les unités de récurrence suivantes : 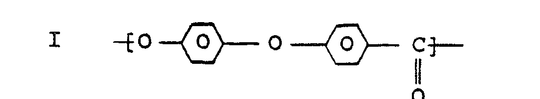 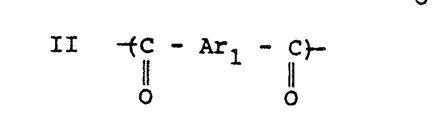 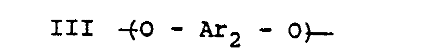 et éventuellement 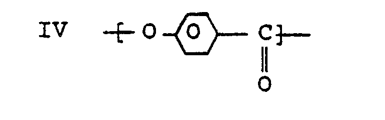 dans lesquelles Ar₁ représente un radical aromatique et/ou cycloaliphatique et Ar₂ un radical aromatique, chaque cycle aromatique ou aliphatique des unités de récurrence 1 à IV étant substitué ou non, caractérisés en ce que :
- la quantité des unités I par rapport à la somme de toutes les unités de récurrence est comprise entre 2,5 et 60 % en mole (a)
- la quantité des unités II par rapport à la somme de toutes les unités de récurrence est comprise entre 2,5 et 45 5 en mole (b)
- la quantité des unités III par rapport à la somme de toutes les unités de récurrence est comprise entre 2,5 et 45 5 en mole (c)
- la quantité des unités IV par rapport & la somme de toutes les unités de récurrence est comprise entre 0 et 90 % en mole (d)
- le rapport molaire des unités Il aux unités III est compris entre 0,95 et 1,05.

2. Copolyesters selon la revendication 1 caractérisés en ce que la teneur en unités de récurrence non linéaires est inférieure ou égale à 60 % en mole.

3. Copolyesters selon l'une des revendications 1 ou 2 caractérisés en ce que les unités de récurrence 1 sont issues de l'acide p-(hydroxy p phénoxy) benzoïque (substitué) et/ou d'un ou plusieurs de ses dérivés (substitués).

4. Copolyesters selon l'une quelconque des revendications 1 à 3 caractérisé en ce que les unités de récurrence II sont des entités issues d'au moins un diacide aromatique et/ou cycloaliphatique (substitué) et/ou d'un ou plusieurs de ses dérivés (substitués).

5. Copolyester selon l'une quelconque des revendications 1 à 3, caractérisés en ce que les unités de récurrence III sont des entités issues d'au moins un diphénol (substitué) et/ou d'un ou plusieurs de ses dérivés (substitués).

6. Copolyester selon l'une quelconque des revendications 1 à 5 caractérisés en ce que les unités de récurrence IV sont des entités issues de l'acide p-hydroxy benzoïque (substitué) et/ou d'un ou plusieurs de ses dérivés (substitués).

7. Copolyester selon l'une quelconque des revendications 1 à 6 caractérisé en ce que sa masse moléculaire en nombre est comprise entre 3 000 et 50 000.

8. Procédé de fabrication des copolyesters des revendications 1 à 7, caractérisé en ce qu'on condense à une température comprise 100 et 400 °C de l'acide p-(hydroxy p-phénoxy)benzoïque et/ou un ou plusieurs de ses dérivés, au moins un diacide aromatique et/ou cycloaliphatique et/ou un de ses dérivés et éventuellement de l'acide p-hydroxy benzoïque et/ou un ou plusieurs de ses dérivés, chacun des composés étant substitué ou non.

9. Procédé selon la revendication 8, consistant en une polycondensation directe entre
l'acide p-(hydroxy p-phénoxy) benzoïque
. un ou plusieurs diacides aromatiques de formule HOOC - Ar₁ - COOH
. un ou plusieurs diphénols de formule HO - Ar2 - OH
l'acide p-hydroxy benzoïque (substitué) et/ou un ou plusieurs de ses dérivés (substitués).

10. Procédé selon la revendication 8, consistant en une polytransestérification entre :
. un ou plusieurs esters de l'acide p-(hydroxy p-phénoxy)benzoïque de formule 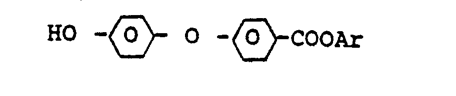
. un ou plusieurs diesters aromatiques de formule Ar OOC - Ar₁ - COOAr
. un ou plusieurs diphénols de formule OH - Ar₂ - OH
. un ou plusieurs esters de l'acide p-hydroxy benzoïque (substitués) et/ou de ses dérivés, (substitués)

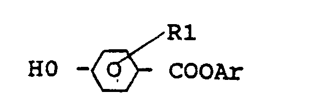

11. Procédé selon la revendication 8, consistant en la polytransestérification ou acidolyse entre :
. un ou plusieurs esters phénoliques de l'acide p(hydroxy p-phénoxy)benzoïque de formule 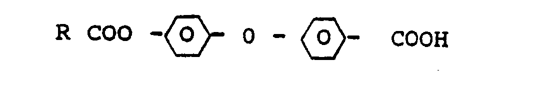
. un ou plusieurs diacides aromatiques de formule HOOC - Ar₁ - COOH
. un ou plusieurs diesters de diphénol(s) de formule RCOO - Ar₂ - OCOR
. un ou plusieurs esters phénoliques de l'acide p-hydroxy benzoïque (substitués) et/ou de ses dérivés (substitués) de formule

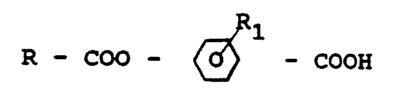

12. Procédé selon l'une quelconque des revendications 8 à 11, caractérisé en ce qu'on incorpore du milieu réactionnel au moins un catalyseur, de préférence à raison de 0,001 % à 2 % en poids par rapport au poids total des monomères introduits et avantageusement à raison de 0,01 à 0,5 % en poids.
